# EUROPEAN PATENT APPLICATION

(11) **EP 3 013 058 A1**
(43) Date of publication of application: **27.04.2016**
(21) Application number: 14814333.2
(22) Date of filing: 19.06.2014
(51) Int. Cl.: H04N 21/234, H04N 7/01

(54) **BROADCASTING TRANSMISSION/RECEPTION APPARATUS AND BROADCASTING TRANSMISSION/RECEPTION METHOD**

(30) Priority: 19.06.2013 US 201361836676 P; 05.07.2013 US 201361843054 P
(71) Applicant: LG Electronics Inc., Yeongdeungpo-gu, Seoul 153-721 (KR)
(72) Inventor: KWON, Woosuk, Seoul 137-893 (KR); MOON, Kyoungsoo, Seoul 137-893 (KR); OH, Sejin, Seoul 137-893 (KR)
(74) Representative: Frenkel, Matthias Alexander
(86) International application number: PCT/KR2014/005404
(87) International publication number: WO 2014/204225

(57) **Abstract**

A broadcasting transmission/reception apparatus and a broadcasting transmission/reception method are disclosed. The broadcasting transmission/reception apparatus comprises: a control unit for generating a transmission packet; and a communication unit for transmitting a broadcasting signal including the generated transmission packet, wherein the transmission packet includes a payload field including data, a stuffing indicator field indicating whether a stuffing byte is included or not, and a network protocol field indicating a network protocol type of the data included in the payload field.

## Description

### [Technical Field]

The present invention relates to a broadcast transmission/reception apparatus and a broadcast transmission/reception method.

### [Background Art]

With development of broadcast and communication technologies, research has been conducted on various broadcast apparatuses and broadcast transmission/reception methods. A hybrid broadcast system serviced through a linkage between a broadcast network and an Internet network is expected to be constructed in a broadcast system such as ATSC 3.0. In this regard, a scheme of inheriting and developing a technology of a digital broadcast system using the existing Internet protocol (IP) has been considered.

To transmit a packet having a form of an IP datagram in a radio interval in a next generation broadcast system, a physical layer is encapsulated in an appropriate form to transmit the packet. For example, a form of an RS frame payload is configured in the ATSC M/H. The RS frame payload includes TPs, each of which has a length of N bytes, and 187 TPs form one RS frame payload. A value of N corresponding to a length of a column of an RS frame is determined by a parade which is a transmission unit of a physical layer of the ATSC M/H, and the value of N varies with RS frame. A header of the TP includes network protocol type information. However, specific data to be included in the TP and transmitted and a scheme of identifying the included data are not specifically defined.

In order to develop ATSC-MH technology, which is primarily developed for mobile broadcasting, into a hybrid broadcast system, technology needs to be partially corrected to be suitable for a hybrid environment or additional technical development is needed. Therefore, there is a need for technology for designating a format of a packet using a structure of a TP to transmit data and signaling information in a next generation broadcast system.

### [Disclosure]

### [Technical Problem]

An object of the present invention devised to solve the problem lies in performing signaling between an IP layer and a physical layer by adding a signaling format in a TP in a broadcast system.

In addition, another object of the present invention is to transmit a packet other than an IP packet using a field capable of indicating a packet type.

Further, another object of the present invention is to add signaling data to a payload of a TP and indicate whether the signaling data is transmitted and the signaling data is included.

In addition, another object of the present invention is to include a packet having a particular form in a payload of a TP and report information about the included packet having the particular form.

Furthermore, another object of the present invention is to include and transmit a moving picture experts group (MPEG)-2 TS in a payload and reduce payload.

### [Technical Solution]

The object of the present invention can be achieved by providing a broadcast transmission apparatus including a controller for generating a transport packet, and a communication unit for transmitting a broadcast signal including the generated transport packet, wherein the transport packet includes a payload field including data, a stuffing indicator field indicating whether a stuffing byte is included, and a network protocol field indicating a network protocol type of the data included in the payload field.

The network protocol field may be set to one of a signaling type, a packetized stream type, a packet type of a fixed length, a packet type of a variable length, and a moving picture experts group (MPEG)-2 type.

The payload field may include a service signaling table when the network protocol field is set to the signaling type, wherein the service signaling table may include a section number indicating an order of a signaling table included in the payload field in the entire service signaling table, and a last section number indicating a section number of a last service signaling table.

The payload field may include a packetized stream descriptor when the network protocol field is set to the packetized stream type, wherein the packetized stream descriptor may include type information of a packet included in the payload field, information about the number of packets, and length information of the packet.

The packet type may be set to the packet type of the fixed length or the packet type of the variable length, wherein the payload field may include one packet type information, one packet number information, one packet length information, and a plurality of packets when the packet type is set to the packet type of the fixed length.

The payload field may include an MPEG-2 TS packet excluding type information of a packet, information about the number of packets, and length information of the packet when the network protocol field is set to the MPEG-2 type.

The MPEG-2 TS packet may include a plurality of fields, and the plurality of fields may be rearranged and relocated in the transport packet.

The transport packet may further include a pointer field, the plurality of fields may include a first group field including a transport error indicator field, a payload unit start indicator field, a transport priority field, and a PID field, a second group field including a transport scrambling control field, an adaptation field control field, and a continuity counter field, and a sync byte field, and the transport packet may dispose the first group field in the payload field, dispose the second group field in the pointer field, and exclude the sync byte field.

In another aspect of the present invention, provided herein is a broadcast transmission method including generating a transport packet, and transmitting a broadcast signal including the generated transport packet, wherein the transport packet includes a payload field including data, a stuffing indicator field indicating whether a stuffing byte is included, and a network protocol field indicating a network protocol type of the data included in the payload field.

In another aspect of the present invention, provided herein is a broadcast reception apparatus including a communication unit for receiving a broadcast signal including a transport packet, and a controller for extracting the transport packet from the received broadcast signal, and extracting a network protocol type of data and the data from the transport packet, wherein the transport packet includes a payload field including the data, a stuffing indicator field indicating whether a stuffing byte is included, and a network protocol field indicating a network protocol type of the data included in the payload field.

The network protocol field may be set to one of a signaling type, a packetized stream type, a packet type of a fixed length, a packet type of a variable length, and an MPEG-2 type.

The payload field may include a service signaling table when the network protocol field is set to the signaling type, wherein the service signaling table may include a section number indicating an order of a signaling table included in the payload field in the entire service signaling table, and a last section number indicating a section number of a last service signaling table.

The payload field may include a packetized stream descriptor when the network protocol field is set to the packetized stream type, wherein the packetized stream descriptor may include type information of a packet included in the payload field, information about the number of packets, and length information of the packet.

The packet type may be set to the packet type of the fixed length or the packet type of the variable length, wherein the payload field may include one packet type information, one packet number information, one packet length information, and a plurality of packets when the packet type is set to the packet type of the fixed length.

The payload field may include an MPEG-2 TS packet excluding type information of a packet, information about the number of packets, and length information of the packet when the network protocol field is set to the MPEG-2 type.

The MPEG-2 TS packet may include a plurality of fields, and the plurality of fields may be rearranged and relocated in the transport packet.

The transport packet may further include a pointer field, the plurality of fields may include a first group field including a transport error indicator field, a payload unit start indicator field, a transport priority field, and a PID field, a second group field including a transport scrambling control field, an adaptation field control field, and a continuity counter field, and a sync byte field, and the transport packet may dispose the first group field in the payload field, dispose the second group field in the pointer field, and exclude the sync byte field.

In another aspect of the present invention, provided herein is a broadcast reception method including receiving a broadcast signal including a transport packet, and extracting the transport packet from the received broadcast signal, and extracting a network protocol type of data and the data from the transport packet, wherein the transport packet includes a payload field including the data, a stuffing indicator field indicating whether a stuffing byte is included, and a network protocol field indicating a network protocol type of the data included in the payload field.

### [Advantageous Effects]

According to the above-described various embodiments, the present invention may reduce time required for a receiver to access data due to restricted signaling data by adding a signaling format to a TP.

In addition, the present invention may add signaling data by designating a signaling format even when signaling data, which is not suitable for an existing format, needs to be transmitted.

Further, the present invention may transmit data using various packets other than an IP packet even when a TP, which only considers IP transmission, is used.

Furthermore, the present invention may transmit a great number of MPEG-2 TSs in the same bandwidth by reducing overhead when the MPEG-2 TSs are transmitted using a TP.

### [Description of Drawings]

FIG. 1 is a diagram illustrating a structure of a transport packet (TP) according to an embodiment of the present invention.
FIG. 2 is a table illustrating a network protocol type according to an embodiment of the present invention.
FIG. 3 is a table illustrating an example of a signaling table.
FIGS. 4 and 5 are diagrams illustrating examples in which a signaling type is added to a TP header.
FIG. 6 is a diagram illustrating an example in which table data corresponding to one signal is included in a plurality of TPs.
FIG. 7 is a table illustrating a network protocol type according to another embodiment of the present invention.
FIG. 8 is a table illustrating a configuration form of a payload of the TP according to an embodiment of the present invention.
FIG. 9 is a table illustrating a packet form included in a payload region of the TP according to an embodiment of the present invention.
FIG. 10 is a table illustrating a configuration form of the payload of the TP according to another embodiment of the present invention.
FIG. 11 is a table illustrating a network protocol type according to another embodiment of the present invention.
FIG. 12 is a table illustrating a configuration form of the payload of the TP which includes an MPEG-2 TS according to an embodiment of the present invention.
FIG. 13 is a diagram illustrating a structure of a packet when the MPEG-2 TS is transmitted according to an embodiment of the present invention.
FIG. 14 is a table illustrating a configuration form of the payload of the TP including the MPEG-2 TS according to an embodiment of the present invention.
FIG. 15 is a diagram illustrating a structure of a packet when a plurality of MPEG-2 TSs is transmitted according to an embodiment of the present invention.
FIG. 16 is a table illustrating a network protocol type that defines the MPEG-2 TS according to an embodiment of the present invention.
FIG. 17 is a diagram illustrating a method of reducing data when the MPEG-2 TS is transmitted in the TP according to an embodiment of the present invention.
FIG. 18 is a diagram illustrating a structure of an MPEG-2 TS packet.
FIG. 19 is a diagram illustrating a method of reducing overhead when the MPEG-2 TS is transmitted according to another embodiment of the present invention.
FIG. 20 is a block diagram illustrating a broadcast transmission apparatus according to an embodiment of the present invention.
FIG. 21 is a block diagram illustrating a broadcast reception apparatus according to an embodiment of the present invention.
FIG. 22 is a block diagram illustrating a broadcast reception apparatus according to another embodiment of the present invention.
FIG. 23 is a flowchart illustrating a broadcast transmission method according to an embodiment of the present invention.
FIG. 24 is a flowchart illustrating a broadcast reception method according to an embodiment of the present invention.

### [Best Mode]

Hereinafter, preferred embodiments of the present invention, which can specifically implement the above-described objects, will be described with reference to the accompanying drawings. In this instance, configurations and effects of the present invention illustrated in the drawings and described with reference to the drawings are described as at least one embodiment, and the technical spirit, a main configuration, and effect thereof of the present invention are not restricted by the configurations and effects.

Although the terms used in the present invention are selected, as much as possible, from general terms that are widely used at present while taking the functions of the present invention into consideration, these terms may be changed based on intentions of those skilled in the art, customs, emergence of new technologies, or the like. In addition, in a particular case, terms that are arbitrarily selected by the applicant of the present invention may be used. In this case, the meanings of these terms will be described in corresponding description parts of the invention. Accordingly, it should be noted that the terms used herein should be construed based on practical meanings thereof and the whole content of this specification, rather than being simply construed based on names of the terms.

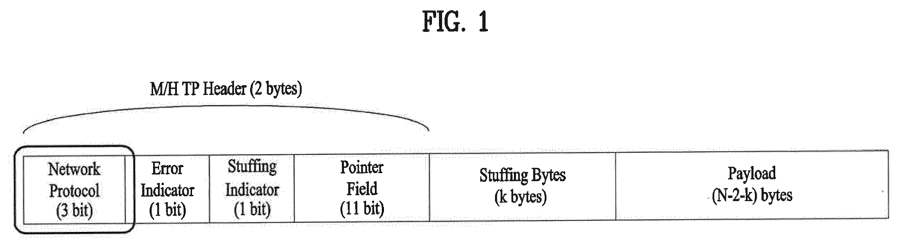

FIG. 1 illustrates a structure of a transport packet (TP) according to an embodiment of the present invention.

Referring to FIG. 1, the TP may include a network protocol field, an error indicator field, a stuffing indicator field, a pointer field, stuffing bytes, and a payload field. A header of the TP may include the network protocol field, the error indicator field, the stuffing indicator field, and the pointer field.

The network protocol field may indicate a network protocol type included in the payload field. The network protocol field will be described below in detail. The error indicator field may indicate whether an error is detected in the TP. For example, the network protocol field may indicate that an error is not detected when a value thereof is 0, and indicate that an error is detected when a value thereof is 1.

The stuffing indicator field may indicate whether a stuffing byte is included in the TP. For example, the stuffing indicator field may indicate that no stuffing byte is included when a value thereof is 0, and indicate that a length field and a stuffing byte are included in front of a payload when a value thereof is 1. The stuffing byte is a value inserted between the header and the payload when the stuffing indicator field has the value of 1.

The pointer field may indicate a starting part of a new network protocol packet in a payload part. For example, when the pointer field has a maximum value (for example, 0x7FF), the pointer field may indicate that the starting part of the new network protocol packet is not present. Alternatively, a particular value of the pointer field indicates an offset value from a last part of the header to the starting part of the new network protocol packet.

The present invention relates to a signaling method enabling a receiver of a digital broadcast system using the TP to rapidly access data. In particular, the present invention may perform signaling using a TP which does not have a function of transmitting signaling data. The signaling data may refer to signaling information.

As described in the foregoing, the header of the TP includes a 3-bit field that indicates a network protocol type. The present invention may designate a signaling type in the network protocol type.

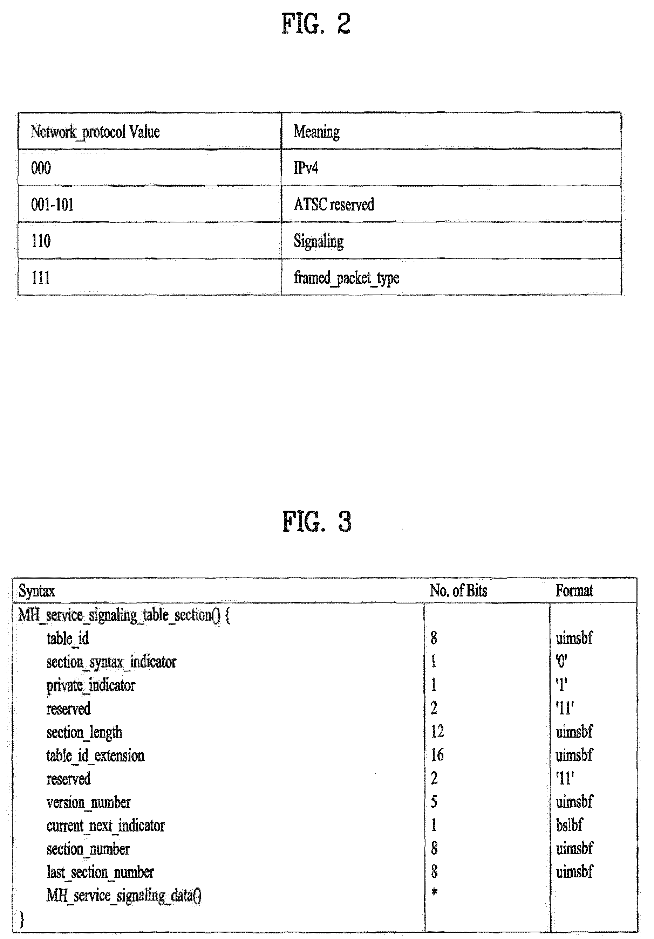

FIG. 2 illustrates a network protocol type according to an embodiment of the present invention.

FIG. 2 illustrates an example in which a value indicating a signaling type is added to the network protocol field. As an example, when a network protocol value is 000, the value may indicate that data included in the payload has a type of IPv4. A value of 110 may indicate that data included in the payload is signaling data. A value of 111 may indicate that data included in the payload corresponds to a framed packet type.

The network protocol type illustrated in FIG. 2 is an example. Therefore, each value in a range from 001 to 110 may be designated as a necessary type according to system. Alternatively, when classification is needed according to type of signaling data, one or more values may be designated.

FIG. 3 illustrates an example of a signaling table.

When the network protocol type is configured as in FIG. 2, if the network protocol type has a value of 110, the value indicates that signaling data is included in the payload. For example, the signaling table illustrated in FIG. 3 may be included in the payload.
table_id - The value of this 8-bit field shall identify the M/H Service Signaling table to which this section belongs.
section_syntax_indicator - This 1-bit field shall be set to 0 to always indicate that this table is derived from the short form of the MPEG-2 private section table.
private_indicator - This 1-bit field shall be set to 1.
section_length - A 12-bit field. It specifies the number of remaining bytes this table section immediately following this field. The value in this field shall not exceed 4093 (0xFFD).
table_id_extension - This is a 16-bit field and is table-dependent. It shall be considered to be logically part of the table_id field providing the scope for the remaining fields.
version_number - This 5-bit field is the version number of the entire M/H Service Signaling table. Each table is identified by the combination of table_id and table_id_extension. The version_number shall be incremented by 1 modulo 32 when a change in the information carried within the M/H Service Signaling table occurs.
current next indicator - A 1-bit field, which when set to 1 indicates that the MH_service_signaling_section sent is currently applicable. When the current_next_indicator is set to 0, it indicates that the MH_service_signaling_section sent is not yet applicable and shall be the next MH_service_signaling_section with the same section_number, table_id_extension, and table_id to become valid.
section_number - This 8-bit field shall give the section number of this M/H Service Signaling table section. The section_number of the first section in an M/H Service Signaling table shall be 0x00. The section_number shall be incremented by 1 with each additional section in the M/H Service Signaling table.
last_section_number - This 8-bit field shall give the number of the last section (i.e., the section with the highest section_number) of the M/H Service Signaling table of which this section is a part.

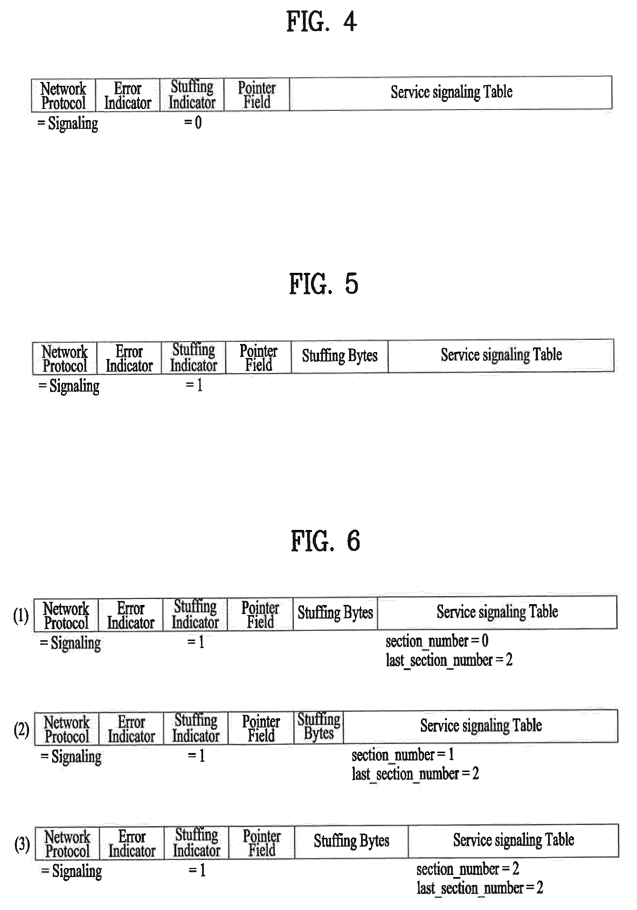

FIG. 4 illustrates an example in which a signaling type is added to the TP header.

The signaling table may be disposed in the TP using a similar scheme to a scheme of disposing the payload. A length of the TP is determined according to a resource of a physical layer to be transmitted, and thus may be N bytes as in FIG. 1. In this instance, a length of the TP header may be 2 bytes, and a maximum size of a payload of one TP may be (N-2) bytes.

FIG. 4 illustrates a data structure of the TP when the service signaling table has the same length as that of the payload of the TP, that is, when the length of the service signaling table is (N-2) bytes.

The network protocol field may include a value that indicates a signaling type. The signaling table may be disposed in the entire payload field. Therefore, there is no stuffing byte, and thus the stuffing indicator field may have the value of 0.

FIG. 5 illustrates another example in which a signaling type is added to the TP header.

FIG. 5 illustrates a data structure of the TP when the service signaling table has a smaller length than that of the payload of the TP, that is, when the length of the service signaling table is less than (N-2) bytes. As in FIG. 5, a portion remaining after the signaling table is disposed may be filled with stuffing bytes. In other words, the stuffing bytes may be disposed between the TP header and the payload according to a stuffing byte disposition rule of the TP.

The network protocol field of the TP may include a value that indicates a signaling type. The signaling table and the stuffing bytes may be disposed in a region including data. Therefore, the stuffing bytes are present, and thus the stuffing indicator field may have the value of 1.

Description has been given of a method of disposing the signaling table in a data region when the service signaling table has a length less than or equal to that of the payload of the TP. Hereinafter, a description will be given of a method of disposing the signaling table in the data region when the service signaling table has a length greater than that of the payload of the TP.

FIG. 6 illustrates an example in which table data corresponding to one signal is included in a plurality of TPs.

A section division scheme may be applied to the signaling table when the service signaling table has a length greater than that of the payload of the TP, that is, when the length of the signaling table is greater than (N-2) bytes.

FIG. 6 illustrates an example in which the service signaling table is divided into three sections and each of the sections is disposed in the payload of the TP. An order of a section may be detected according to values of a section number and a last section number included in each section table. When all sections are collected, one table may be configured.

Referring to FIG. 6(1), the TP may include the network protocol field, the error indicator field, the stuffing indicator field, the pointer field, stuffing bytes, and the payload field including the service signaling table. Each field has been described above, and thus will not be described again.

The section number may indicate an order of a signaling table included in the payload field in the entire service signaling table. The last section number may indicate a section number of a last service signaling table.

A first signaling table section may be disposed in a TP illustrated in FIG. 6(1). The signaling table is divided into three sections, and thus numbers of 0, 1, and 2 may be applied to the respective signaling table sections. In other words, when a section number of the TP illustrated in FIG. 6(1) is 0, this means that the first signaling table section is included. In addition, when a last section number is 2, this means that the signaling table is divided into three sections in total. In other words, it is possible to indicate that the TP illustrated in FIG. 6(1) includes the first one of three signaling table sections using the section number and the last section number.

A second signaling table section may be disposed in a TP illustrated in FIG. 6(2). When a section number of the TP illustrated in FIG. 6(2) is 1, this means that the second signaling table section is included. In addition, when a last section number is 2, this means that the signaling table is divided into three sections in total. In other words, it is possible to indicate that the TP illustrated in FIG. 6(2) includes the second one of the three signaling table sections using the section number and the last section number.

A third signaling table section may be disposed in a TP illustrated in FIG. 6(3). When a section number of the TP illustrated in FIG. 6(3) is 2, this means that the third signaling table section is included. In addition, when a last section number is 2, this means that the signaling table is divided into three sections in total. In other words, it is possible to indicate that the TP illustrated in FIG. 6(3) includes the third one of the three signaling table sections using the section number and the last section number.

Referring to FIG. 6, the divided service signaling table has a smaller size than that of the payload. Thus, stuffing bytes are present, and the stuffing indicator is 1. However, when the service signaling table is divided to have the same size as that of the payload, no stuffing byte is present. Thus, the stuffing indicator may be 0.

Description has been given of an example in which signaling data is disposed in the TP when a network protocol type is defined and the protocol type is a signaling type.

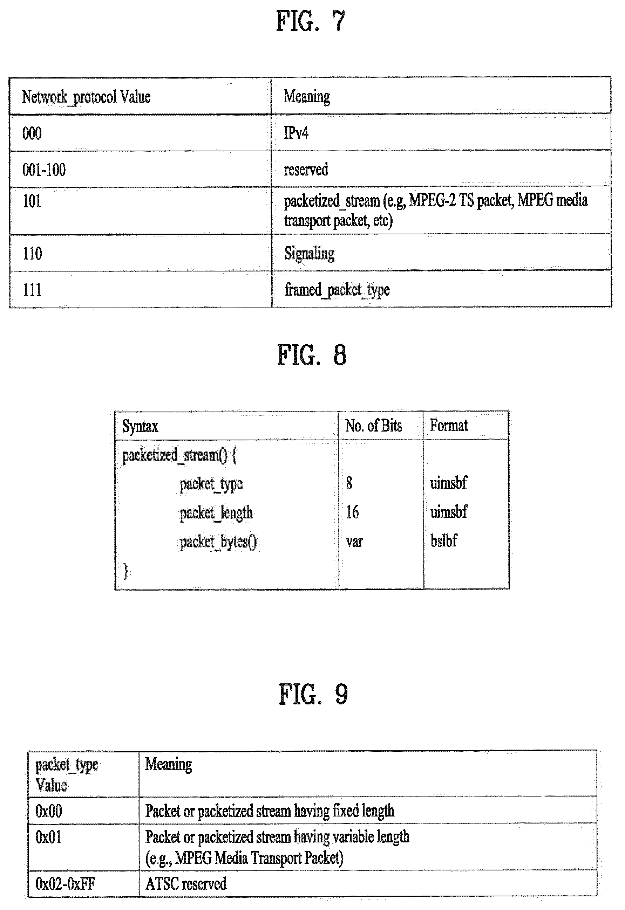

FIG. 7 illustrates a network protocol type according to another embodiment of the present invention.

Referring to FIG. 7, as an example, a value of 101 of the network protocol field may be defined as a packetized stream type, and a value of 110 thereof may be defined as a signaling type. In this way, when the packetized stream type is defined, an MPEG-2 TS packet, a packet having a form which is not registered in the Internet Assigned Numbers Authority (IANA), etc. may be included in the payload. For example, a packetized stream may include an MPEG-2 TS packet, an MPEG media TP, etc.

According to system, each value in a range from 001 to 101 may be designated as a necessary type. The payload may include a packet without change or a reconfigured packet.

FIG. 8 illustrates a configuration form of the payload of the TP according to an embodiment of the present invention.

FIG. 8 illustrates an example of the configuration form of the payload of the TP which includes a packetized stream. The packetized stream may be reconfigured in a descriptor form and included in the payload of the TP. For example, a descriptor of the packetized stream may include fields of a packet type, a packet length, and packet bytes.

The packet type indicates a form of the packet included in a payload part of the TP. A specific type of the packet will be described below.

The packet length indicates a length of data in bytes of packet_byte() included in the payload part of the TP. The packet length may be included only when the packet type is not fixed.

The packet bytes indicate substantial data of the packet included in the payload part of the TP.

FIG. 9 illustrates a packet form included in a payload region of the TP according to an embodiment of the present invention.

When a packetized stream is reconfigured and included in the payload, packet type information may be included as an example. For example, a packet type may include a packet or a packetized stream having a fixed length and a packet or a packetized stream having a variable length.

The packet or the packetized stream having the fixed length refers to a packet or a stream such as an MPEG-2 TS having a fixed size. The packet or the packetized stream having the variable length refers to a packet or a stream such as an MPEG media TP having a variable length according to packet or stream.

The payload of the TP including the packetized stream may be configured in another form.

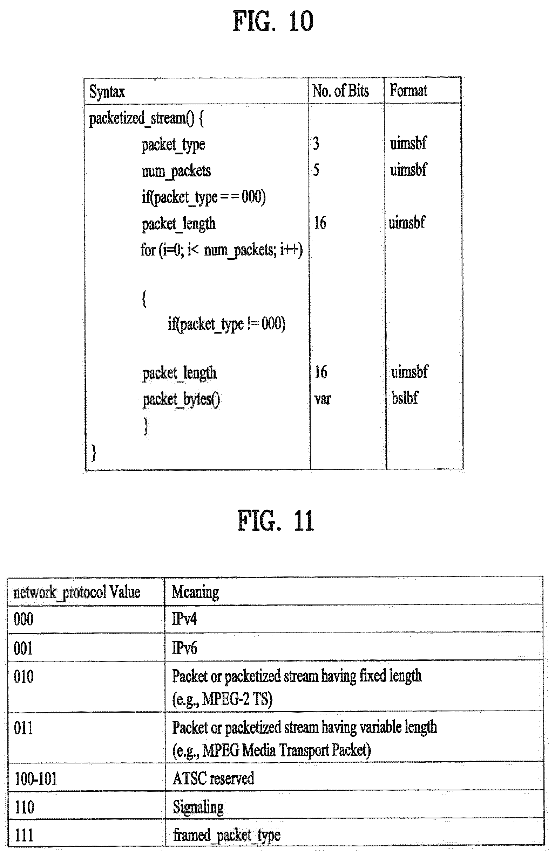

FIG. 10 illustrates a configuration form of the payload of the TP according to another embodiment of the present invention.

FIG. 10 illustrates another example of the configuration form of the payload of the TP which includes the packetized stream. When the packetized stream is transmitted, one TP may include a plurality of packets having the same form as necessary.

For example, a descriptor of the packetized stream may include fields of a packet type, information about the number of packets, a packet length, and packet bytes.

The packet type indicates a form of a packet included in a payload part of the TP. A specific type of the packet is as described with reference to FIG. 9.

The information about the number of packets indicates the number of packets included in the payload part of the TP.

The packet length indicates a length of data in bytes of_packet_bytes() included in the payload part of the TP. The packet length may be included only when the packet type is not fixed.

The packet bytes indicate substantial data of the packet included in the payload part of the TP.

When classification is needed according to type of each packet which is not registered in the IANA, one or more values may be designated for a network protocol type in the TP for each packet.

FIG. 11 illustrates a network protocol type according to another embodiment of the present invention.

FIG. 11 illustrates an example in which one or more values are designated for the network protocol type in the TP.

A network protocol type field may define a packet or a packetized stream type having a fixed length for each value, a packet or a packetized stream type having a variable length, and a signaling type.

The packet or the packetized stream having the fixed length refers to a packet or a stream such as an MPEG-2 TS having a fixed size. The packet or the packetized stream having the variable length refers to a packet or a stream such as an MPEG media TP having a variable length according to packet or stream. The signaling type refers to signaling data as in the service signaling table.

When one or more values are designated for each packet in the network protocol type of the TP, one or more packets may be included in the payload of the TP.

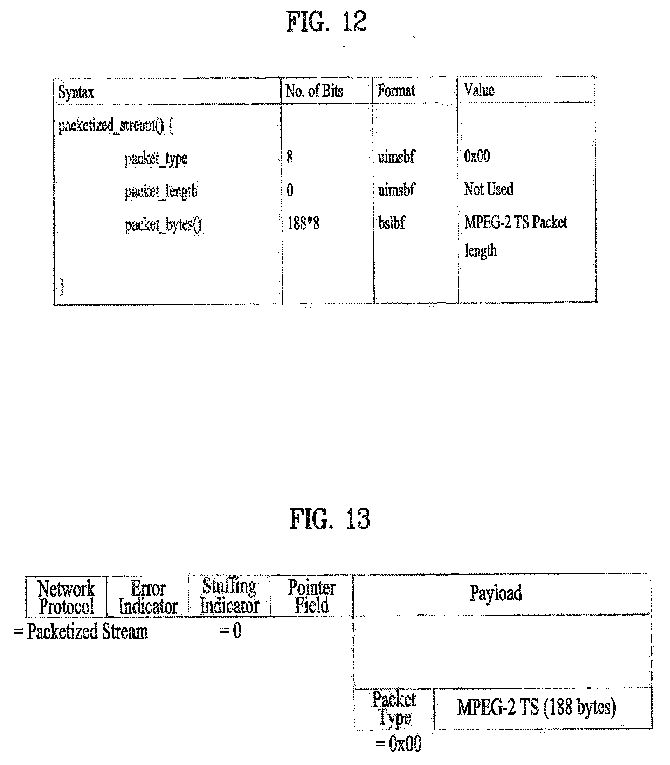

FIG. 12 illustrates a configuration form of the payload of the TP which includes the MPEG-2 TS according to an embodiment of the present invention.

FIG. 12 illustrates an example of transmitting an MPEG-2 TS packet when a value of a 3-bit field, which designates a protocol type of the TP header, is designated as a packetized stream type. In the present specification, description is given using the MPEG-2 TS packet as an example. However, the present invention may be similarly applied to a packet or a packetized stream having a fixed length rather than being restricted to a case in which the MPEG-2 TS packet is transmitted.

The protocol type may be designated as a packet or a packetized stream type having a fixed length to transmit the MPEG-2 TS packet. According to system, a protocol type value may be defined as a necessary type.

The packetized stream may be reconfigured in a descriptor form and included in the payload of the TP. For example, a descriptor of the packetized stream may include fields of a packet type, a packet length, and packet bytes.

The packet type indicates a form of the packet included in the payload part of the TP. For example, the packet type may be defined as an MPEG-2 TS type when a value thereof is 0x00, defined as a packet or a packetized stream type having a variable length when the value is 0x01, and defined as a reserved region when the value is 0x02-0xFF.

The packet length indicates a length of data in bytes of packet_bytes() included in the payload part of the TP. The packet length may be included only when the packet type is not fixed. Therefore, since the MPEG-2 TS packet is a packet having a fixed length, the packet length field may not be used when the packet type is the MPEG-2 TS.

The packet bytes indicate substantial data of the packet included in the payload part of the TP. When the MPEG-2 TS is transmitted, a TS packet of 188 bytes may be included without change.

FIG. 13 illustrates a structure of a packet when the MPEG-2 TS is transmitted according to an embodiment of the present invention.

FIG. 13 illustrates a structure of a TP which includes the MPEG-2 TS packet of FIG. 12. The TP may include a network protocol field, an error indicator field, a stuffing indicator field, a pointer field, and a payload field.

The network protocol field may indicate a network protocol type included in the payload field of the TP. An MPEG-2 TS is included in the TP of FIG. 13, and thus a value indicating a packetized stream type may be set in the network protocol field. The error indicator field may indicate whether an error is detected in the TP. The stuffing indicator field may indicate whether stuffing bytes are included in the TP. The pointer field may indicate a starting part of a new network protocol packet in a payload part.

A payload may include packet type information and an MPEG-2 TS packet. A packetized stream descriptor may include a packet type, a packet length, and packet byte information. However, the MPEG-2 TS has a fixed length of 188 bytes, and thus the packet length and the packet byte information may be excluded. That is, the payload may only include information indicating that a packet type is an MPEG-2 TS as information about a packet.

Meanwhile, the payload may include a plurality of MPEG-2 TSs.

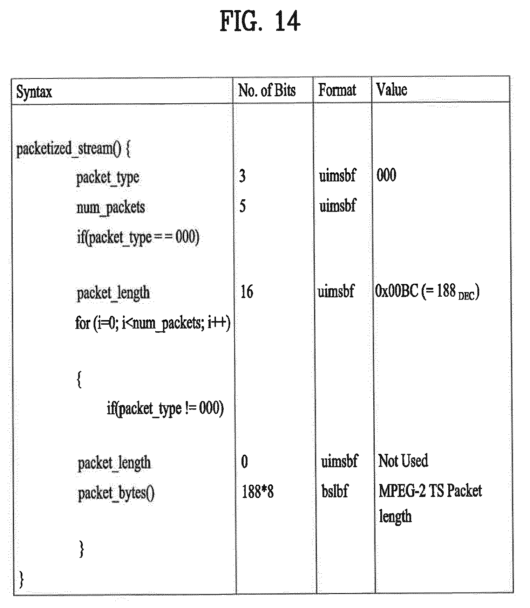

FIG. 14 illustrates a configuration form of a payload of a TP including an MPEG-2 TS according to an embodiment of the present invention.

FIG. 14 illustrates a configuration form of a payload of a TP which includes a plurality of MPEG-2 TSs. The payload may include MPEG-2 TS information in a form of a packetized stream descriptor. Each field is described below.

A packet type indicates a form of a packet included in a payload part of the TP. For example, a packet type may include a packet or a packetized stream such as an MPEG-2 TS having a fixed length and a packet or a packetized stream such as an MPEG media TP having a variable length.

A num packet indicates the number of packets included in the payload part of the TP.

A packet length indicates a length of data in bytes of_packet_bytes() included in the payload part of the TP. For example, when a packet type corresponds to the packet or the packet stream having the fixed length (for example, the MPEG-2 TS), packet length information is included once and a repeated packet may be regarded to have the same packet length. For example, the MPEG-2 TS has a packet length of 188 bytes.

Packet bytes indicate substantial data of the packet included in the payload part of the TP. For example, when the MPEG-2 TS is transmitted, a TS packet of 188 bytes may be included in the payload without change.

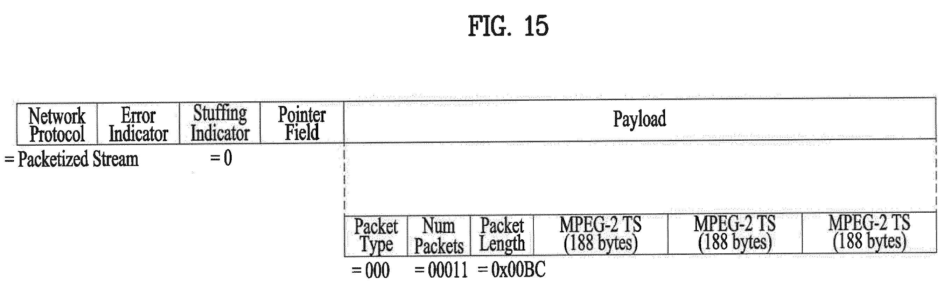

FIG. 15 illustrates a structure of a packet when a plurality of MPEG-2 TSs is transmitted according to an embodiment of the present invention.

For example, when three MPEG-2 TS packets are transmitted, a type of a 3-bit packet included in a payload of a TP may be set to a packetized stream type having a fixed length or an MPEG-2 TS type (for example, 000 in base 2), the number of packets may be set to three (for example, 00011 in base 2), and a packet length may be set to 188 (for example, 0x000BC). The three MPEG-2 TS packets may be positioned after packet-related information.

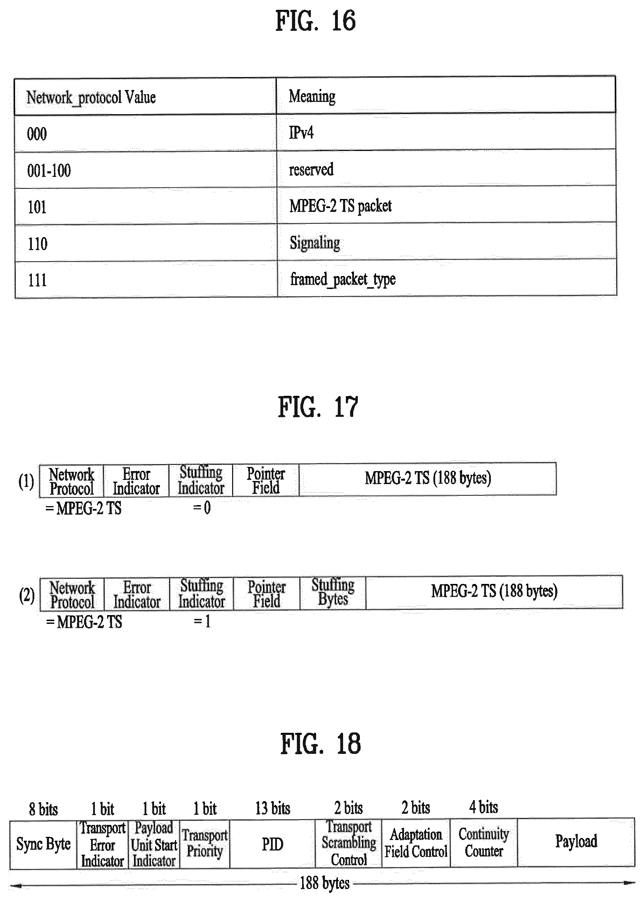

FIG. 16 illustrates a network protocol type that defines an MPEG-2 TS according to an embodiment of the present invention.

FIG. 16 illustrates a network protocol type that defines a protocol type of data included in a payload according to an embodiment of the present invention. An MPEG-2 TS type may be defined as one of several values that indicate the network protocol type in order to transmit the MPEG-2 TS. For example, as illustrated in FIG. 16, an MPEG-2 TS packet type may be defined as a value of 101.

Each value in a range from 001 to 101 may be designated as a necessary type according to system.

FIG. 17 illustrates a method of reducing data when an MPEG-2 TS is transmitted in a TP according to an embodiment of the present invention.

When a network protocol type is designated as an MPEG-2 TS packet, separate packet information may not be needed since a packet type, a length, etc. of the MPEG-2 TS packet are fixed. Therefore, the MPEG-2 TS packet may be included in a payload without change. In a similar manner, transmission data may be reduced when the MPEG-2 TS is transmitted. The MPEG-2 TS is an example. In a packet or a packetized stream having a fixed length, transmission data may be reduced using a similar scheme to that described with reference to FIG. 17. In addition, when a size of the payload is greater than 188 bytes, which is a length of the MPEG-2 TS packet, stuffing bytes may be inserted.

Referring to FIG. 17(1), a value indicating the MPEG-2 TS may be set in a network protocol field. When a packet type included in the payload is set to an MPEG-2 TS, and one MPEG-TS is included in one TP, packet information such as a packet type and the number of packets is not needed. Therefore, the MPEG-2 TS packet may be included in the payload without change. Stuffing bytes are not needed when a size of the payload is the same as a length of the MPEG-2 TS packet.

Referring to FIG. 17(2), the same network protocol field value may be set similarly to FIG. 17(1), and packet information such as a packet type and the number of packets may be excluded. However, when a size of a payload is greater than a length of an MPEG-2 TS packet, stuffing bytes may be inserted into a remaining region.

FIG. 17 illustrates a method of reducing transmission data when an MPEG-2 TS is inserted into a TP and transmitted. However, overhead of 2 bytes corresponding to a length of a header of the TP may be generated when compared to an existing case of directly transmitting the MPEG-2 TS. Hereinafter, a description will be given of a method of reducing overhead when the MPEG-2 TS is transmitted in the TP.

FIG. 18 illustrates a structure of an MPEG-2 TS packet.

The MPEG-2 TS packet includes a sync byte field, a transport error indicator field, a payload unit start indicator field, a transport priority field, a packet identifier (PID) field, a transport scrambling control field, an adaptation field control field, a continuity counter field, and a payload field.

The sync byte field has 8 bits, and indicates a start of a TS packet using a fixed value of 0x47. The transport error indicator field has 1 bit, and indicates whether an error is included in a transmitted packet. For example, a value thereof is 1 when there is no error, and is 0 when there is an error.

The payload unit start indicator field has 1 bit, and indicates whether a start of original data is present in the packet. In a case of a TS packet, original data may be divided and transmitted. Thus, a receiver may reprocess the original data after detecting a part of the original data included in data which is included in a current packet. A value thereof is 0 when a middle part of the original data is included in the packet, and is 1 when a starting part of the original data is included therein.

The transport priority field has 1 bit, and indicates a priority of the TS packet. The PID field has 13 bits, and indicates a type of data of a payload included in the packet.

The transport scrambling control field has 2 bits, and indicates whether the payload is scrambled. The adaptation field control field has 2 bits, and indicates the presence/absence of an adaptation field. The continuity counter field has 4 bits. A packet having the same PID is transmitted when a continuity counter is incremented by 1.

Hereinafter, a description will be given of a specific method of reducing overhead of the TP.

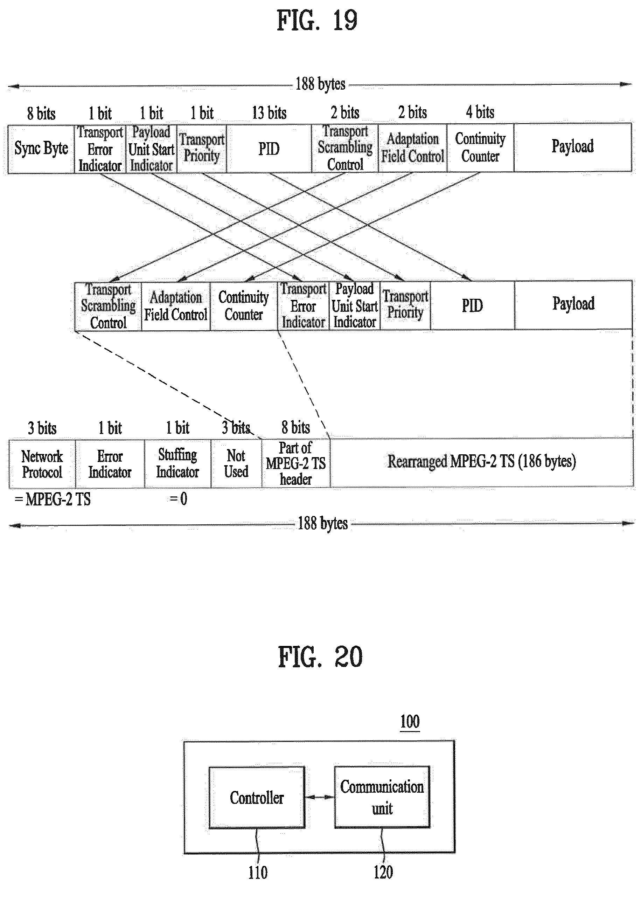

FIG. 19 illustrates a method of reducing overhead when an MPEG-2 TS is transmitted according to another embodiment of the present invention.

For convenience of description, a transport error indicator field, a payload unit start indicator field, a transport priority field, and a PID field are defined as a first group. In addition, a transport scrambling control field, an adaptation field control field, and a continuity counter field are defined as a second group.

In a header part of an MPEG-2 TS packet, a sync byte field is set to a fixed value of 0x47 to report a start of the packet when the packet is transmitted as a stream. When the MPEG-2 TS packet is transmitted in a TP, a starting part of the MPEG-2 TS packet may be detected using a header of the TP. Thus, a sync byte may not be transmitted.

In addition, the MPEG-2 TS packet excluding the sync byte corresponding to 1 byte has a fixed length of 187 bytes. Thus, a pointer field for considering a variable length of the payload positioned in the TP is not needed. Therefore, some fields of the MPEG-2 TS packet may be allocated to the TP header.

A specific method of allocating the MPEG-2 TS packet to the TP is described below. Positions of the fields of the first group and the fields of the second group are replaced. The second group of 8 bits including the transport scrambling control field, the adaptation field control field, and the continuity counter field may be disposed in a position of the pointer field of the TP. In addition, the payload field and the first group including the transport error indicator field, the payload unit start indicator field, the transport priority field, and the PID field may be disposed in the payload of the TP. The payload field and the first group of the MPEG-2 TS packet have 186 bytes in total. In addition, the TP header has 2 bytes, and the second group of the MPEG-2 TS packet is included in the TP header. Therefore, the TP including the MPEG-2 TS packet has 188 bytes in total, and thus a size of the TP is the same as that corresponding to a case of directly transmitting the MPEG-2 TS. Accordingly, the TP including the MPEG-2 TS may be transmitted without overhead.

In this way, a plurality of fields included in the MPEG-2 TS packet may be rearranged and relocated in the TP.

FIG. 20 illustrates a broadcast transmission apparatus 100 according to an embodiment of the present invention.

Referring to FIG. 20, the broadcast transmission apparatus 100 includes a controller 110 and a communication unit 120.

The controller 110 generates a TP. The controller 110 may include an encoder (not illustrated) to encode video or audio data. In addition, the controller 110 may include a signaling information generator (not illustrated) to generate signaling information for the encoded video or audio data. The generated signaling information may be included in the

TP.

The TP may include a payload field, a stuffing indicator field, and a network protocol field. The network protocol field may be set to one of a signaling type, a packetized stream type, a packet type of a fixed length, a packet type of a variable length, and an MPEG-2 type.

When the network protocol field is set to the MPEG-2 type, an MPEG-2 TS packet includes a plurality of fields, and the plurality of fields may be rearranged and relocated in the TP.

The communication unit 120 transmits a broadcast signal including the generated TP.

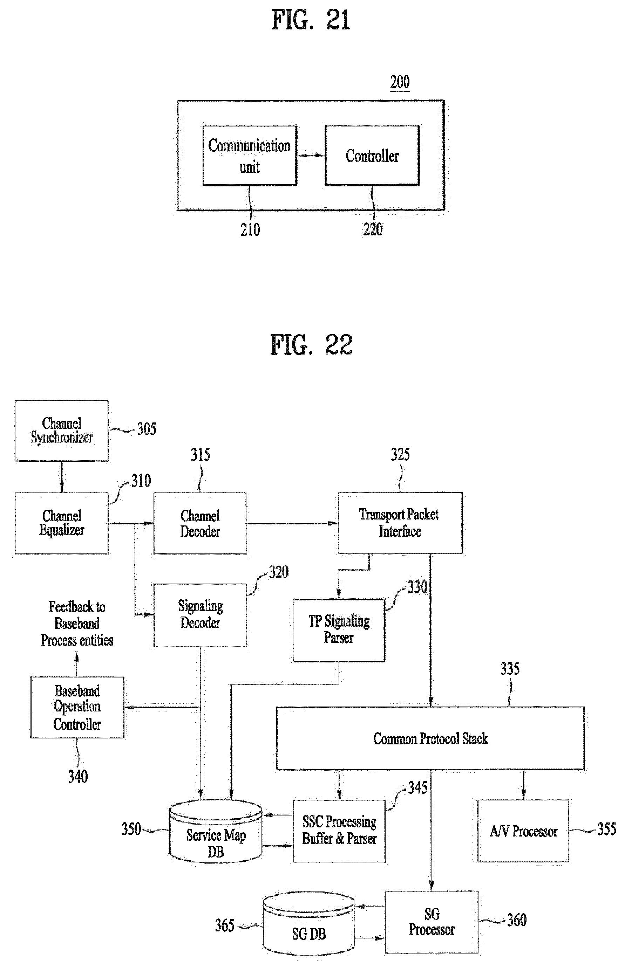

FIG. 21 illustrates a broadcast reception apparatus 200 according to an embodiment of the present invention.

Referring to FIG. 21, the broadcast reception apparatus 200 includes a communication unit 210 and a controller 220.

The communication unit 210 receives a broadcast signal including a TP.

The controller 220 extracts the TP from the received broadcast signal, and extracts a network protocol type of data and the data from the TP.

In the TP, a network protocol field may be set to a value indicating one of a signaling type, a packetized stream type, a packet type of a fixed length, a packet type of a variable length, and an MPEG-2 type. A type distinguished by the network protocol field indicates a protocol type of data included in a payload.

For example, when the network protocol field is set to the signaling type, a payload field may include a service signaling table. When the network protocol field is set to the packetized stream type, the payload field may include a packetized stream descriptor to include a packetized stream having a fixed length such as an MPEG-2 TS or a packetized stream having a variable length such as an MPEG-2 media transport stream.

When the protocol type is set to the packetized stream having the fixed length such as the MPEG-2 TS, a plurality of fields included in the MPEG-2 TS may be rearranged and relocated in the TP. In this way, overhead of the packetized stream having the fixed length may be reduced.

FIG. 22 illustrates a broadcast reception apparatus according to another embodiment of the present invention.

Referring to FIG. 22, the broadcast reception apparatus includes a channel synchronizer 305, a channel equalizer 310, a channel decoder 315, a signaling decoder 320, a transport packet interface 325, a TP signaling parser 330, a common protocol stack 335, a baseband operation controller 340, an SSC processing buffer & parser 345, a service map DB 350, an A/V processor 355, a service guide (SG) processor 360, and an SG DB 365.

The channel synchronizer 305 may adjust synchronization of a symbol frequency and timing to allow appropriate decoding in a baseband.

The channel equalizer 310 may compensate for distortion of a received signal when the received signal is distorted due to multipath propagation, the Doppler effect, etc.

The channel decoder 315 may perform forward error correction (FEC) to restore meaningful data from the received signal.

The signaling decoder 320 may extract and decode signaling data delivered from a channel.

The transport packet interface 325 may extract a TP, and combine signaling information or an IP datagram from a protocol type of the TP.

The TP signaling parser 330 may collect signaling section information delivered through the transport packet interface 325 to configure a complete signaling table.

The common protocol stack 335 may temporarily store the complete signaling table.

The baseband operation controller 340 may control several processing procedures with respect to the baseband.

The SSC processing buffer & parser 345 may extract an SSC table section from an IP multicast stream including IP level signaling information as information necessary for service selection and a scan process.

The service map DB 350 may store data related to a service map.

The A/V processor 355 may perform decoding and presentation processing for received audio and video data.

The SG processor 360 may extract announcement information from the received signal, manage the SG DB, and provide an SG.

The SG DB 365 may store data about the SG.

The communication unit 210 of FIG. 21 may include the channel synchronizer 305 of FIG. 22, and the controller 220 of FIG. 21 may include the channel equalizer 310, the channel decoder 315, the signaling decoder 320, the transport packet interface 325, the TP signaling parser 330, the common protocol stack 335, the baseband operation controller 340, the SSC processing buffer & parser 345, the service map DB 350, the AN processor 355, the SG processor 360, and the SG DB 365 of FIG. 22.

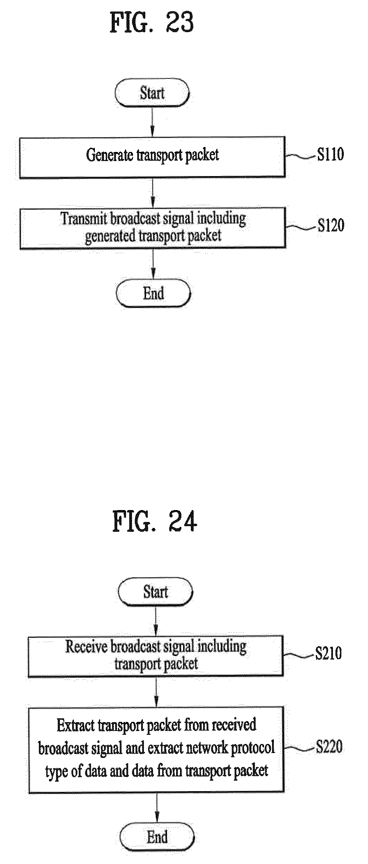

FIG. 23 illustrates a broadcast transmission method according to an embodiment of the present invention.

Referring to FIG. 23, the broadcast transmission apparatus generates a TP in S110. The TP may include a payload field, a stuffing indicator field, and a network protocol field.

The network protocol field indicates a protocol type of data included in the payload field. In other words, the network protocol field may be set to a value related to one of a signaling type, a packetized stream type, a packet type of a fixed length, a packet type of a variable length, and an MPEG-2 type.

When the network protocol field is set to the signaling type, the payload field may include a service signaling table.

When the network protocol field corresponds to a packetized stream such as an MPEG-2 TS packet having a fixed length, overhead of the TP may be reduced by rearranging a plurality of fields included in the packetized stream and relocating the plurality of fields in the TP.

In S120, the broadcast transmission apparatus transmits a broadcast signal including the generated TP.

FIG. 24 illustrates a broadcast reception method according to an embodiment of the present invention.

Referring to FIG. 24, the broadcast reception apparatus receives a broadcast signal including a TP in S210.

In S220, the broadcast reception apparatus extracts the TP from the received broadcast signal, and extracts a network protocol type of data and the data from the TP.

Specifically, a signaling decoder included in a controller may extract and decode signaling data delivered from a channel. The TP interface may extract the TP, and combine signaling information or an IP datagram from a protocol type of the TP. The TP signaling parser may collect signaling section information delivered through the TP interface to configure a complete signaling table.

Referring to the broadcast transmission/reception apparatus and the broadcast transmission/reception method according to the present invention, the configurations and methods of the above-described embodiments are not restrictively applied, and all or some of the respective embodiments may be selectively combined and configured such that the embodiments may be variously changed.

In addition, although preferred embodiments of the present invention have been illustrated and described, it should be noted that the present invention is not restricted to a particular embodiment described above, and may be variously modified by those skilled in the art within the scope of the appended claims and their equivalents. In addition, the modified embodiments should not be understood separately from the technical spirit or view of the present invention.

### [Industrial Applicability]

The present invention has industrial applicability in a broadcast and video signal processing field.

## Claims

**1.** A broadcast transmission apparatus comprising:
a controller for generating a transport packet; and
a communication unit for transmitting a broadcast signal including the generated transport packet,
wherein the transport packet includes a payload field including data, a stuffing indicator field indicating whether a stuffing byte is included, and a network protocol field indicating a network protocol type of the data included in the payload field.

**2.** The broadcast transmission apparatus according to claim 1, wherein the network protocol field is set to one of a signaling type, a packetized stream type, a packet type of a fixed length, a packet type of a variable length, and a moving picture experts group (MPEG)-2 type.

**3.** The broadcast transmission apparatus according to claim 2, wherein the payload field includes a service signaling table when the network protocol field is set to the signaling type,
wherein the service signaling table includes a section number indicating an order of a signaling table included in the payload field in the entire service signaling table, and a last section number indicating a section number of a last service signaling table.

**4.** The broadcast transmission apparatus according to claim 2, wherein the payload field includes a packetized stream descriptor when the network protocol field is set to the packetized stream type,
wherein the packetized stream descriptor includes type information of a packet included in the payload field, information about the number of packets, and length information of the packet.

**5.** The broadcast transmission apparatus according to claim 4, wherein the packet type is set to the packet type of the fixed length or the packet type of the variable length,
wherein the payload field includes one packet type information, one packet number information, one packet length information, and a plurality of packets when the packet type is set to the packet type of the fixed length.

**6.** The broadcast transmission apparatus according to claim 2, wherein the payload field includes an MPEG-2 TS packet excluding type information of a packet, information about the number of packets, and length information of the packet when the network protocol field is set to the MPEG-2 type.

**7.** The broadcast transmission apparatus according to claim 6, wherein the MPEG-2 TS packet includes a plurality of fields, and the plurality of fields are rearranged and relocated in the transport packet.

**8.** The broadcast transmission apparatus according to claim 7,
wherein the transport packet further includes a pointer field,
the plurality of fields include
a first group field including a transport error indicator field, a payload unit start indicator field, a transport priority field, and a PID field,
a second group field including a transport scrambling control field, an adaptation field control field, and a continuity counter field, and
a sync byte field, and
the transport packet disposes the first group field in the payload field, disposes the second group field in the pointer field, and excludes the sync byte field.

**10.** A broadcast reception apparatus comprising:
a communication unit for receiving a broadcast signal including a transport packet; and
a controller for extracting the transport packet from the received broadcast signal, and extracting a network protocol type of data and the data from the transport packet,
wherein the transport packet includes a payload field including the data, a stuffing indicator field indicating whether a stuffing byte is included, and a network protocol field indicating a network protocol type of the data included in the payload field.

**11.** The broadcast reception apparatus according to claim 10, wherein the network protocol field is set to one of a signaling type, a packetized stream type, a packet type of a fixed length, a packet type of a variable length, and an MPEG-2 type.

**12.** The broadcast reception apparatus according to claim 11, wherein the payload field includes a service signaling table when the network protocol field is set to the signaling type,
wherein the service signaling table includes a section number indicating an order of a signaling table included in the payload field in the entire service signaling table, and a last section number indicating a section number of a last service signaling table.

**13.** The broadcast reception apparatus according to claim 11, wherein the payload field includes a packetized stream descriptor when the network protocol field is set to the packetized stream type,
wherein the packetized stream descriptor includes type information of a packet included in the payload field, information about the number of packets, and length information of the packet.

**14.** The broadcast reception apparatus according to claim 13, wherein the packet type is set to the packet type of the fixed length or the packet type of the variable length,
wherein the payload field includes one packet type information, one packet number information, one packet length information, and a plurality of packets when the packet type is set to the packet type of the fixed length.

**15.** The broadcast reception apparatus according to claim 11, wherein the payload field includes an MPEG-2 TS packet excluding type information of a packet, information about the number of packets, and length information of the packet when the network protocol field is set to the MPEG-2 type.

**16.** The broadcast reception apparatus according to claim 15, wherein the MPEG-2 TS packet includes a plurality of fields, and the plurality of fields are rearranged and relocated in the transport packet.
